# EUROPÄISCHE PATENTSCHRIFT

(11) **EP 3 999 210 B1**
(45) Veröffentlichungstag und Bekanntmachung des Hinweises auf die Patenterteilung: **04.10.2023**
(21) Anmeldenummer: 21719588.2
(22) Anmeldetag: 14.04.2021
(51) Int. Cl.: B01D 46/00, B01D 46/10, B01D 46/52, B60H 3/06, F02M 35/024

(54) **LUFTFILTEREINRICHTUNG UND FILTERELEMENT FÜR EINE LUFTFILTEREINRICHTUNG EINES KRAFTWAGENS**
AIR FILTER DEVICE AND FILTER ELEMENT FOR AN AIR FILTER DEVICE OF A MOTOR VEHICLE
DISPOSITIF DE FILTRE À AIR ET ÉLÉMENT FILTRANT POUR UN DISPOSITIF DE FILTRE À AIR D'UN VÉHICULE À MOTEUR

(30) Priorität: 22.04.2020 DE 102020110996
(43) Veröffentlichungstag der Anmeldung: 25.05.2022
(73) Patentinhaber: Mercedes-Benz Group AG, 70372 Stuttgart (DE)
(72) Erfinder: ENDERLE, Wolfgang, 73269 Hochdorf (DE); SCHUMACHER, Eric, 70565 Stuttgart (DE)
(74) Vertreter: Novagraaf Group
(86) Internationale Anmeldenummer: PCT/EP2021/059710
(87) Internationale Veröffentlichungsnummer: WO 2021/213869

(56) Entgegenhaltungen:
- CN-A- 108 928 218
- DE-A1- 2 342 567
- DE-A1-102007 048 396
- DE-A1-102013 020 382

## Beschreibung

Die Erfindung betrifft eine Luftfiltereinrichtung mit einem Filtergehäuse zur Aufnahme eines auswechselbaren Filterelements für eine Luftfiltereinrichtung eines Kraftwagens, wobei das Filtergehäuse Kulissen zur Führung und Lagerung von Vorsprüngen an zwei einander gegenüberliegenden Seitenwänden des flachen Filterelements aufweist, welches aus einem Filtervlies besteht, das in einem Rahmen, der die Seitenwände bildet, gehalten ist. Des Weiteren betrifft die Erfindung ein Filterelement mit Vorsprüngen an den Seitenwänden für eine solche Luftfiltereinrichtung eines Kraftwagens.

Damit ein Filterelement in einem Gehäuse einer Luftfiltereinrichtung für einen Kraftwagen seine Funktion sicher erfüllen kann, ist dafür zu sorgen, dass das Filterelement in dem Gehäuse dichtend und lagestabil fixiert ist.

Die DE 10 2014 004 738 A1 beschreibt ein Filterelement mit einem kastenförmigen Grundkörper, wobei in einer aus flexiblem Material gebildeten Rahmenwand des Grundkörpers demgegenüber versteifte Führungselemente ausgebildet sind, die zur Befestigung des Filterelements auf gehäuseseitigen Führungsschienen dienen.

Die DE 10 2007 048 396 A1 und die DE 10 2007 048 395 A1 beschreiben jeweils ein Filterelement für eine Klimaanlage eines Kraftwagens. Das Filterelement weist einander gegenüberliegende Stirnseiten auf, welche aus Papiermaterial oder aus Kunststoffmaterial hergestellt sind. Von jeder Stirnseite ragen zwei zapfenförmige Führungselemente senkrecht ab. Um das Filterelement in seine Wirkposition zu bringen, werden die Führungselemente entlang von Führungsnuten verschoben, welche in einem Gehäuse der Klimaanlage ausgebildet sind. Bei dieser Klimaanlage sind zwei derartige Filterelement nebeneinander im Strömungsquerschnitt des Gehäuses anzuordnen. Die vollständige Bewegung der Filterelemente beim Ein- und Ausbau findet vollständig in einer durch die Führungsnuten bestimmten Ebene, senkrecht zur Strömungsrichtung, statt. Nach dem Einsetzen des zweiten Filterelements in das Gehäuse, wird die zum Einsetzen der Filterelemente ausgebildete Öffnung in dem, den Strömungsquerschnitt umgebenden Gehäuse mittels eines Deckels verschlossen. In dem Deckel ist eine weitere Führungsnut ausgebildet, in welche beim Anbringen des randseitigen Deckels an dem Gehäuse die Führungselemente des zweiten Innenraumfilters eingebracht werden. Somit wirkt bei dieser Ausgestaltung der Deckel beim korrekten Positionieren und Halten der Filterelemente unterstützend mit.

Soll das Filterelement jedoch in einen gehäuseseitig - bezogen auf den Strömungsquerschnitt - rundum geschlossenen Rahmen-Querschnitt der Luftfiltereinrichtung eingesetzt werden, beispielweise in eine aufklappbare Hutze oder ein Ende eines Luftkanals, kann der Einsatz/Ausbau des Filterelements nicht in der gleichen Ebene erfolgen, in der das Filterelement seine Betriebsposition einnimmt. Vielmehr muss das Filterelement in - oder gegen -Strömungsrichtung in die Ebene seiner endgültigen Betriebsposition versetzt werden.

Bei einer Luftfiltereinrichtung, bei welcher das Filterelement in einen solchen geschlossenen Gehäusequerschnitt eingesetzt wird, kann eine Halterung des Filterelements vorgesehen sein, bei welcher das Filterelement in der Betriebsposition auf gehäuseseitigen Vorsprüngen, aufliegen soll. Diese Vorsprünge sind beispielsweise im aufnehmenden Gehäuserahmen als kleine, nach innen abragende Vorsprünge oder Konsolen an gegenüberliegenden Gehäusewänden des Gehäuses ausgebildet.

Für den Einsatz des Filterelements muss dabei der Rahmen des Filterelements zunächst ein Stück weit einwärts zusammengedrückt werden, um das Filterelement an den, den Gehäusequerschnitt einengenden Vorsprüngen vorbei - auf die sie tragenden Vorsprünge setzen zu können, sobald es wieder in die Ursprungsgestalt zurückspringt. Dabei kann es vorkommen, dass eine Wand des Filterrahmens nicht richtig auf die tragenden Vorsprünge zu liegen kommt, sondern lediglich gegen die Vorsprünge gedrückt wird. Insbesondere in dem Bereich des Gehäuses der Luftfiltereinrichtung, in welchem die Vorsprünge nicht gut einsehbar sind, kann dies unerkannt bleiben. Auf diese Weise kann es zu einer unerwünschten und zudem nicht leicht erkennbaren Leckage der Luftfiltereinrichtung kommen.

Die DE 10 2013 020 382 A1 beschreibt ein Filterelement mit Rahmen zur Befestigung in einer Filter-Hutze bzw. in einem rundum geschlossenen Querschnitt eines Luftfiltergehäuses. An einem - in Einschubrichtung des Rahmens vorausweisenden - Ende zweier gegenüberliegender Seitenwände sind - quer zur Einschubrichtung - seitlich abstehende Eingriffselemente angeordnet. Die Eingriffselemente werden in gehäuseseitige Kulissenführungen eingeführt. In der Endlage der Eingriffselemente in den Kulissenführungen kann das Filterelement um die so gebildete Schwenkachse verschwenkt werden, um es sodann vollständig in das umgebende Gehäuse einzubringen. An der Stirnseite des Rahmens des Filterelements, die der Rückwand nahe der Schwenkachse gegenüberliegt, sind zwei elastische Schnapphaken angebracht. Die Schnapphaken verrasten durch das Einschwenken des Filterelements mit jeweiligen Rastelementen, welche seitens des Filtergehäuses ausgebildet sind.

Aufgabe der vorliegenden Erfindung ist es, eine verbesserte Luftfiltereinrichtung der eingangs genannten Art anzugeben, bei welcher das Filterelement besonders einfach in seine vorbestimmte Einbauposition im Filtergehäuse zu montieren ist, sowie ein verbessertes Filterelement für den Einbau in die entsprechende Luftfiltereinrichtung.

Diese Aufgabe wird durch eine Luftfiltereinrichtung mit den Merkmalen des Patentanspruchs 1 und ein Filterelement mit den Merkmalen des Patentanspruchs 5 gelöst. Vorteilhafte Ausgestaltungen mit zweckmäßigen Weiterbildungen der Erfindung sind in den abhängigen Patentansprüchen angegeben.

Die erfindungsgemäße Luftfiltereinrichtung- im Weiteren auch als "Luftfiltergehäuse" oder "Gehäuse" bezeichnet - für einen Kraftwagen umfasst ein Gehäuse mit einem Aufnahmeraum für ein erfindungsgemäßes Filterelement. Das Filterelement weist einen Rahmen auf, welcher ein Filtermaterial zumindest bereichsweise umgibt, wobei der Rahmen zwei gegenüberliegende Seitenwände sowie ebenfalls gegenüberliegende Querwände, welche die Seitenwände verbinden, umfasst. Von jeder Seitenwand steht nahe der gleichen Querwand je ein erster Vorsprung ab.

Das Gehäuse weist - korrespondierend zum Rahmen des Filterelements - zwei gegenüberliegende Gehäuse-Seitenwände auf. Die beiden Gehäuse-Seitenwände weisen wenigstens je eine Kulisse auf, in welcher der jeweilige erste Vorsprung der entsprechenden oder korrespondierenden Seitenwand des Filterelements in je einen ersten ihm zugedachten Kulissen-Endbereich einsetzbar ist, der entlang einer ersten Richtung der Kulisse erreichbar ist.

Erfindungsgemäß ist vorgesehen, dass von den Seitenwänden des Filterelement je ein zweiter Vorsprung nahe der anderen der beiden Querwände absteht, und die Gehäuse-Seitenwände jeweils einen zweiten - entgegen der ersten Richtung weisenden - Kulissen-Endbereich aufweisen, in welche die jeweils zweiten Vorsprünge einsetzbar sind, so dass sich das Filterelement dann in seiner Betriebsposition im Aufnahmeraum des Gehäuses befindet, wobei die Seitenwände elastisch verformbar sind, so dass ein Abstand der beiden an derselben Seitenwand angeordneten Vorsprünge voneinander verringerbar ist, um die zweiten Vorsprünge beim Einsetzen an einwärts gerichteten Kulissen-Führungsflanken vorbei in den ihnen jeweils zugeordneten oder zugedachten zweiten Endbereich zu bringen.

Haben die ersten Vorsprünge ihre jeweiligen Kulissen-Endbereich in den einander gegenüberliegenden Gehäuse-Seitenwänden erreicht, kann das Filterelement in dieser Position um die so gelagerten Vorsprünge gebildete Drehachse verschwenkt werden.

Danach können die beiden noch freien - oder zweiten - Vorsprünge der einander gegenüberliegenden Gehäusewände in die ihnen zugeordneten zweiten Kulissen-Endbereiche verbracht werden, indem die Seitenwände des Filterelements, beispielsweise durch Druck auf die den zweiten Vorsprüngen nähere - und noch frei zugängliche - Querwand des Filterelements, in Richtung der ersten Vorsprünge gestaucht werden. Dadurch verringert sich der Abstand der jeweils ersten und zweiten Vorsprünge voneinander, wobei die Vorsprünge entlang der gehäuseseitigen Kulissen-Führungsflanken geführt werden, und das Filterelement am Ende der Bewegung in die Ebene des Aufnahmeraums gehoben wird, wo durch ein Zurückspringen der Seitenwände in ihren unverformten Ausgangszustand die zweiten Vorsprünge die ihnen zugeordneten Kulissen-Endbereiche einnehmen. Das Filterelement ist dann lagegesichert in seiner Einbauposition gehalten. Die beschriebene Luftfiltereinrichtung und das zugehörige Filterelement ermöglichen eine sehr einfach auszuführende und prozesssichere Montage des Filterelements, indem durch die kontrollierbar und schlüssig geführten Bewegungen beim Einbau eine schnelle und sichere Montage des Filterelements gewährleistet wird. Dadurch dass mit der vorgeschlagenen Konstruktion von Luftfiltereinrichtung und Filterelement frontseitige Verriegelungsmechanismen am Filterelement entfallen können, kann darüberhinaus auch Bauraum eingespart werden.

In den Kulissen-Endbereichen sind die Vorsprünge an den Seitenwänden des Filterelements in einer Endlage gegen ein unbeabsichtigtes Herausbewegen oder ein Herausfallen aus der Kulisse gesichert, denn für eine Entnahme beziehungsweise Demontage des Filterelements muss das Filterelement wiederum deformiert werden. Um das Filterelement aus dem Gehäuse entnehmen zu können, wird der jeweilige Vorsprung beispielsweise durch einen händischen Eingriff in das mit den Wänden des Filterelements verbundene Filtermaterial entweder entlang der Kulisse oder orthogonal dazu - in Richtung Mittenachse des Filterelements -, unter Verformung wenigstens der entsprechenden Seitenwand aus seiner Endlage herausbewegt. Ohne eine Verformung der Seitenwand können die Vorsprünge jedenfalls nicht aus der Kulisse herausbewegt werden. Folglich ist auch das Filterelement sicher in dem Aufnahmeraum aufgenommen, wenn sich die Vorsprünge in der jeweiligen Endlage bzw. in den Kulissen-Endbereichen befinden.

Die Luftfiltereinrichtung kann insbesondere als Luftfiltereinrichtung einer Klimaanlage beziehungsweise Belüftungseinrichtung des Kraftwagens ausgebildet sein. Des Weiteren kann die Luftfiltereinrichtung für einen Ansaugtrakt eines Verbrennungsmotors des Kraftwagens vorgesehen sein, also als Filter für die von einem Verbrennungsmotor angesaugte Luft.

Vorzugsweise weist die wenigstens eine Kulisse der jeweiligen Gehäuse-Seitenwand einen Führungssteg auf, entlang welchem der erste Vorsprung der jeweils entsprechenden Seitenwand des Filterelements beim Einsetzen des Filterelements in den Aufnahmeraum in den ersten Endbereich der Kulisse führbar ist, wobei sich der Führungssteg entlang einer Unterkante der jeweiligen Gehäuse-Seitenwand erstreckt.

Durch die beidseitigen unterseits mit einem Führungssteg versehenen Kulissen wird eine komfortable und sichere Montage des Filterelements in das Gehäuse der Luftfiltereinrichtung bereitgestellt. Durch so geschiente Kulissenabschnitte, bei denen sowohl nach oben als auch nach unten eine Führung für die Vorsprünge vorhanden ist, können die ersten Vorsprünge auch bei schlechter oder verdeckter Sicht zuverlässig in ihre jeweiligen Kulissen-Endbereiche geführt werden.

Alternativ kann vorgesehen sein, dass sowohl die erste Gehäusewand als auch die zweite Gehäusewand je zwei Kulissen aufweist, welche einander, in Richtung des Abstands der an der zugehörigen Seitenwand des Filterelements angeordneten Vorsprünge gegenüberliegende und schräg zueinander verlaufende Führungsflanken aufweisen.

Bei dieser Ausführungsform können für die Montage des Filterelements zunächst - wahlfrei - zwei gegenüberliegende Vorsprünge des Filterelements zuerst in die ihnen zugedachten Kulissen bzw. Kulissen-Endbereiche eingesetzt, wodurch wieder eine zur entsprechenden Querseite parallele Schwenkachse bereitgestellt ist, so dass das Filterelement an der anderen, freien Querseite gefasst werden kann, und sodann die beiden noch freien seitlichen Vorsprünge entlang der zugehörigen Kulissen-Führungsflanken - wiederum durch Druck in Richtung der zuerst eingesetzten Vorsprünge unter Verringerung des Abstandes zu diesen sowie durch Anheben - in die zugehörigen Kulissen-Endbereiche gelangen; und damit auch das Filterelement in die Betriebsposition. Das Filterelement kann aber auch einfach senkrecht von unten in den Aufnahmeraum des Gehäuses eingeschoben werden. Auf diese Weise ist ebenfalls eine sehr einfache und prozesssichere Montage in Form des Einbringens des Filterelements in den Aufnahmeraum erreichbar.

Vorzugsweise schließen sich die Kulissen-Endbereiche der beiden Kulissen der jeweiligen Gehäusewand direkt an die jeweiligen Kulissen-Führungsflanken an, wobei sich die Kulissen-Endbereiche in auseinander weisende Richtungen erstrecken.

Durch die unmittelbare Nähe der Endbereiche zu den Führungsflanken ist eine besonders einfache Montage - und auch Demontage - des Filterelements erreichbar, da hierfür nur eine vergleichsweise geringe Stauchung der Seitenwände zur Verringerung des Abstandes zwischen den in den Endbereichen der Kulissen zu lagernden Vorsprüngen erzielt werden muss. Durch die auseinander weisenden Richtungen der Kulissen-Endbereiche finden sich die - nach der Stauchung der Seitenwände wieder auseinander strebenden - Vorsprünge vorteilhaft von selbst in die ihnen zugedachte Lage zur Halterung des Filterelements in der Betriebsposition.

Das erfindungsgemäße Filterelement für die oben beschriebene erfindungsgemäße Luftfiltereinrichtung eines Kraftwagens umfasst einen Rahmen, welcher ein Filtermaterial des Filterelements zumindest bereichsweise umgibt, wobei der Rahmen eine erste Seitenwand und gegenüberliegend eine zweite Seitenwand, sowie eine erste und gegenüberliegend eine zweite, die Seitenwände verbindende Querwand aufweist. Sowohl an der ersten Seitenwand als auch an der zweiten Seitenwand sind je zwei Vorsprünge zum Haltern des in den Aufnahmeraum des Gehäuses der Luftfiltereinrichtung einsetzbaren Filterelements in Kulissen-Endbereichen entsprechender oder zugeordneter Gehäuse-Seitenwände - also jeweils die, die bei eingebautem Filterelement der Filter-Seitenwand benachbart ist - angeordnet. Die beiden Vorsprünge stehen von der jeweiligen Seitenwand ab.

Der jeweils erste Vorsprung der jeweiligen Seitenwand des Filterelements ist in jeweils einen in eine erste Richtung weisenden ersten Kulissen-Endbereich wenigstens je einer Kulisse einsetzbar, welche in zwei gegenüberliegenden Gehäuse-Seitenwänden des Gehäuses ausgebildet sind. Von den Seitenwänden steht je ein zweiter Vorsprung nahe der anderen der beiden Querwände ab. Die zweiten Vorsprünge sind in je einen - in eine entgegen der ersten Richtung weisenden - zweiten Kulissen-Endbereich der Gehäuse-Seitenwände einsetzbar, so dass sich das Filterelement im Aufnahmeraum des Gehäuses in seiner Betriebsposition befindet.

Erfindungsgemäß ist weiter vorgesehen, dass ein Abstand der beiden jeweils an einer Seitenwand angeordneten Vorsprünge in einem unverformten Zustand der Seitenwände einem Abstand der ihnen gehäuseseitig zugedachten oder zugeordneten Kulissen-Endbereiche in der entsprechenden Gehäuse-Seitenwand entspricht, wobei die Seitenwände elastisch verformbar ausgebildet sind, sodass aufgrund eines elastischen Verformens der jeweiligen Seitenwand ein Abstand der beiden jeweils an einer Seitenwand angeordneten Vorsprünge voneinander verringerbar ist, um die jeweils zweiten Vorsprünge beim Einsetzen an einwärts gerichteten Kulissen-Führungsflanken vorbei in den ihnen zugeordneten zweiten Kulissen-Endbereich zu bringen.

Ein derartiges Filterelement kann einfach und zuverlässig in eine vorbestimmte Einbauposition verbracht werden, indem zuerst zwei Vorsprünge gegenüberliegender Seitenwände in die ihnen zugeordneten gehäuseseitigen Kulissen-Endbereiche eingesetzt werden, welche in einander gegenüberliegenden Gehäuse-Seitenwänden des Gehäuses der Luftfiltereinrichtung ausgebildet sind, wodurch eine Schwenkachse parallel zur nächstgelegenen Querwand des Filterelements bereitgestellt ist. Danach können die beiden noch freien Vorsprünge der einander gegenüberliegenden Gehäusewände entlang der gehäuseseitigen Kulissen-Führungsflanken in die ihnen zugedachten oder zugeordneten zweiten Kulissen-Endbereiche verbracht werden, indem die Seitenwände des Filterelements durch Druck auf die den zweiten Vorsprüngen nähere Querwand des Filterelements in Richtung der ersten Vorsprünge gestaucht werden, wodurch sich der Abstand der jeweils ersten und zweiten Vorsprünge voneinander verringert. Durch ein Zurückspringen der Seitenwände in ihren unverformten Ausgangszustand, wodurch die zweiten Vorsprünge die ihnen zugeordneten oder zugedachten Kulissen-Endbereiche einnehmen, kann das Filterelement lagegesichert in seiner Einbauposition gehalten werden.

Das Filterelement ist aufgrund seiner schlichten Bauart kostengünstig und einfach herzustellen. Es sind lediglich vier gleichartige Vorsprünge an zwei Seitenwänden des Filterelements vorzusehen, die beispielsweise durch Ultraschallschweißen auf ein beispielsweise vliesartiges Material für die Seitenwände gesetzt werden können.

Vorzugsweise weisen die beiden an der jeweiligen Seitenwand angeordneten Vorsprünge in einem nicht verformten Ausgangszustand der jeweiligen Seitenwand einen Abstand voneinander auf, welcher um ein Vielfaches größer ist als ein Abstand eines jeweiligen der beiden Vorsprünge von einem Rand der Seitenwand, welcher diesem Vorsprung nahe ist.

Die beiden an derselben Seitenwand angeordneten Vorsprünge sind also vorzugsweise in Endbereichen der jeweiligen Seitenwand angeordnet. Ein erster der beiden Vorsprünge ist dementsprechend einem ersten Rand der Seitenwand nahe, und ein zweiter der beiden Vorsprünge ist einem zweiten Rand der Seitenwand nahe, wobei sich die Ränder der Seitenwand in Richtung des Abstands gegenüberliegen, den die Vorsprünge voneinander haben. Durch ein derartige randständige Positionierung - oder anders gesagt, durch einen möglichst großen Abstand - der Vorsprünge an der jeweiligen Seitenwand lässt sich der Abstand zwischen den beiden an derselben Seitenwand angeordneten Vorsprüngen durch das Verformen der Seitenwand besonders leicht verringern.

Vorzugsweise weist ein erster der beiden an derselben Seitenwand angeordneten Vorsprünge ein größeres Außenmaß auf als ein zweiter der beiden an dieser Seitenwand angeordneten Vorsprünge. Durch derartige im Hinblick auf ihr Außenmaß unterschiedlich gestaltete Vorsprünge kann, bei entsprechender Gestaltung der gehäuseseitigen Kulissen-Endbereiche, sichergestellt werden, dass das Filterelement lagerichtig verbaut beziehungsweise eingebaut wird. Denn es kann vorgesehen sein, dass sich lediglich der Vorsprung mit dem passenden Außenmaß in die jeweilige Kulisse einführen lässt. Somit lässt sich ein korrekter und lagerichtiger Einbau des Filterelements in das Luftfiltergehäuse einfach erreichen.

Insbesondere können die Vorsprünge als jeweilige Zapfen ausgebildet sein. Derartige, beispielsweise nach Art von Kreiszylindern ausgebildete Vorsprünge lassen sich besonders reibungsarm entlang der jeweiligen gehäuseseitigen Kulisse verschieben. Auch lassen sich Zapfen mit unterschiedlich großen Durchmessern fertigungstechnisch sehr einfach herstellen.

Es kann vorgesehen sein, dass ein erster der beiden an derselben Seitenwand angeordneten Vorsprünge einer Unterkante der Seitenwand näher ist als ein zweiter der beiden an dieser Seitenwand angeordneten Vorsprünge. Die beiden an derselben Seitenwand angeordneten Vorsprünge können in Richtung einer Höhe der Seitenwand unterschiedlich weit von der Unterkante der Seitenwand beabstandet sein. Die Höhe der Seitenwand ist vorzugsweise zu einer Richtung parallel, in welche Luft im Betrieb des Filterelements durch das Filtermaterial hindurchtritt. Durch eine derartige Anordnung der Vorsprünge in unterschiedlicher Nähe zu der Unterkante kann erreicht werden, dass das Filterelement lediglich in einer vorbestimmten Ausrichtung zu dem Luftfiltergehäuse in einen Aufnahmeraum eingebracht werden kann, welcher in dem Gehäuse ausgebildet ist. Auch ist einer prozesssicheren Montage des Filterelements zuträglich.

Es kann weiterhin vorgesehen sein, dass die Seitenwände, welche die Vorsprünge aufweisen, eine geringere Steifigkeit aufweisen als die Querwände, welche die Seitenwände des Rahmens miteinander verbinden. Wenn die mit den Vorsprüngen versehenen Seitenwände die geringere Steifigkeit aufweisen als die weiteren Wände, lassen sich die mit den Vorsprüngen versehenen Seitenwände besonders einfach elastisch verformen. Die weiteren Wände mit der im Vergleich dazu höheren Steifigkeit sorgen demgegenüber insgesamt für eine gute Stabilität des Rahmens. Besonders einfach lässt sich die unterschiedliche Steifigkeit der Wände bereitstellen, indem die mit den Vorsprüngen versehenen Seitenwände eine geringere Dicke aufweisen als die weiteren Wände.

Die für das erfindungsgemäße Filterelement beschriebenen Vorteile und bevorzugten Ausführungsformen gelten auch für die erfindungsgemäße Luftfiltereinrichtung und umgekehrt.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: perspektivisch ein Filterelement für eine Luftfiltereinrichtung eines Kraftwagens;
- Fig. 2: perspektivisch ein Gehäuse der Luftfiltereinrichtung, in welches das Filterelement gemäß Fig. 1 eingebracht oder eingebaut werden kann;
- Fig. 3: einen ersten Schritt bei der Montage des Filterelements gemäß Fig. 1 in das Gehäuse gemäß Fig. 2;
- Fig. 4: einen zweiten Schritt bei der Montage des Filterelements gemäß Fig. 1 in das Gehäuse gemäß Fig. 2;
- Fig. 5: einen dritten Schritt bei der Montage des Filterelements gemäß Fig. 1 in das Gehäuse gemäß Fig. 2;
- Fig. 6: ausschnittsweise das Gehäuse gemäß Fig. 2 mit der in ihre Einbauposition verbrachten Filterelement gemäß Fig. 1;
- Fig. 7: eine Variante des Filterelements gemäß Fig. 1;
- Fig. 8: eine Variante des Gehäuses gemäß Fig. 2;
- Fig. 9: einen ersten Schritt beim Einbringen des Filterelements gemäß Fig. 7 in das Gehäuse gemäß Fig. 8;
- Fig. 10: einen zweiten Schritt beim Einbringen des Filterelements gemäß Fig. 7 in das Gehäuse gemäß Fig. 8; und
- Fig. 11: das Erreichen einer Einbauposition des Filterelements gemäß Fig. 7 in dem Gehäuse gemäß Fig. 8.

In den Fig. sind gleiche oder funktionsgleiche Elemente mit gleichen Bezugszeichen versehen.

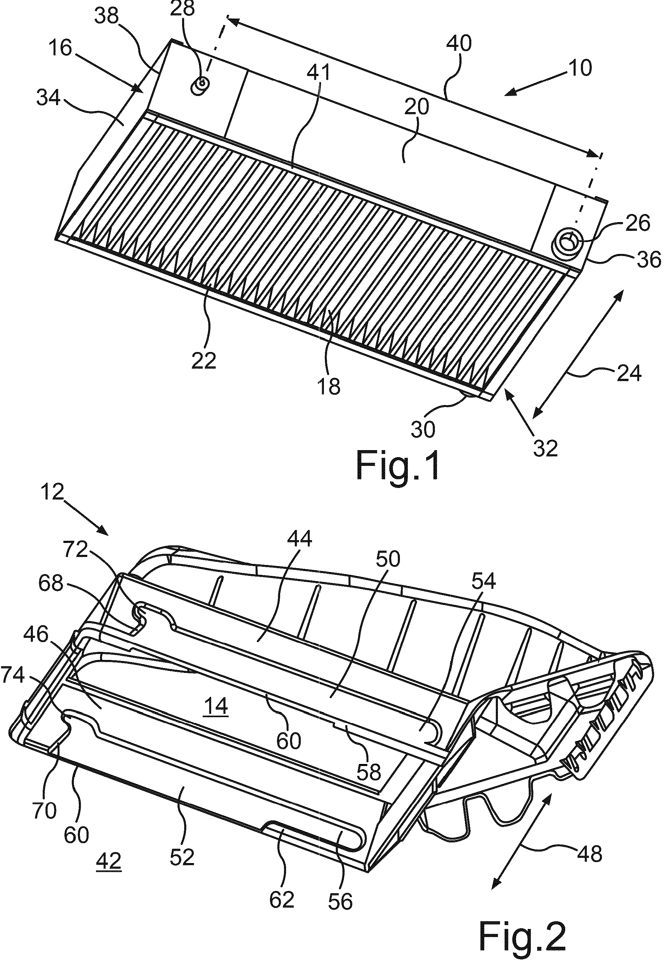

In Fig. 1 ist in einer schematischen Perspektivansicht ein Filterelement 10 für eine Luftfiltereinrichtung eines Kraftwagens gezeigt. Die Luftfiltereinrichtung umfasst ein Gehäuse 12, welches schematisch und perspektivisch in Fig. 2 gezeigt ist. Dementsprechend weist das Gehäuse 12 einen Aufnahmeraum 14 auf, in welchen das Filterelement 10 eingebracht werden kann.

Bei der in Fig. 1 gezeigten Variante des Filterelements 10 weist das Filterelement 10 einen Rahmen 16 auf, welcher ein Filtermaterial 18 vollständig umgibt oder einfasst. Mit anderen Worten ist das insbesondere als Filtergewebe ausgebildete Filtermaterial 18, durch welches im Betrieb der Luftfiltereinrichtung die zu filternde Luft hindurchströmt, innerhalb des Rahmens 16 gehalten. Wenn, wie vorliegend beispielhaft gezeigt, das Filterelement 10 als Faltenfilter ausgebildet ist, so kann das Filtermaterial 18 eine entsprechende Faltung mit einer Vielzahl von Falten aufweisen.

Vorliegend umfasst der Rahmen 16 eine erste Seitenwand 20 und eine zweite Seitenwand 22, welche der ersten Seitenwand 20 in Querrichtung des Filterelements 10 gegenüberliegt. Die Querrichtung ist in Fig. 1 durch einen Doppelpfeil 24 veranschaulicht. An der jeweiligen Seitenwand 20, 22 sind jeweils zwei Vorsprünge angeordnet, welche bei der in Fig. 1 gezeigten Variante des Filterelements 10 als Haltezapfen 26, 28, 30 ausgebildet sind.

In Fig. 1 sind ein erster Haltezapfen 26, welcher an der ersten Seitenwand 20 angeordnet ist, und ein zweiter Haltezapfen 28 gut erkennbar, welcher ebenfalls an der ersten Seitenwand 20 angeordnet ist. Die beiden Haltezapfen 26, 28 stehen von der ersten Seitenwand 20 parallel zu der Querrichtung nach außen ab, welche in Fig. 1 durch den Doppelpfeil 24 veranschaulicht ist. Von den beiden analog ausgebildeten und analog angeordneten Haltezapfen, welche an der in Querrichtung gegenüberliegenden, zweiten Seitenwand 22 angeordnet sind, ist lediglich ein erster Haltezapfen 30 in Fig. 1 ein kleines Stück weit zu sehen.

Die Haltezapfen 26, 28, 30 können mit der jeweiligen Seitenwand 20, 22 verklebt oder auf eine sonstige Art und Weise stoffschlüssig verbunden sein, etwa durch Verschweißen, insbesondere durch Ultraschallschweißen. Des Weiteren ist es möglich, die Haltezapfen 26, 28, 30 einstückig mit der jeweiligen Seitenwand 20, 22 auszubilden.

Bei der in Fig. 1 gezeigten Variante des Filterelements 10 weist der erste Haltezapfen 26 einen größeren Durchmesser auf als der zweite Haltezapfen 28. Analoges gilt für die beiden an der zweiten Seitenwand 22 angeordneten Haltezapfen, von welchen lediglich der erste, den größeren Durchmesser aufweisende Haltezapfen 30 in Fig. 1 zu sehen ist.

Der Rahmen 16 umfasst vorliegend auch zwei weitere Wände 32, 34, welche sich in die Querrichtung erstrecken, und welche die erste Seitenwand 20 und die zweite Seitenwand 22 miteinander verbinden.

Wie aus Fig. 1 ersichtlich ist, sind die an der jeweiligen Seitenwand 20, 22 ausgebildeten Haltezapfen 26, 28 in jeweiligen Endbereichen der Seitenwand 20, 22 angeordnet. Mit anderen Worten ist etwa der erste Vorsprung oder erste Haltezapfen 26 einem ersten Rand 36 der ersten Seitenwand 20 nahe, und der zweite Vorsprung oder zweite Haltezapfen 28 ist einem zweiten Rand 38 der Seitenwand 20 nahe, wobei vorliegend diese Ränder 36, 38 durch einander gegenüberliegende Eckbereiche des Rahmens 16 gebildet sind. Die Eckbereiche oder Ränder 36, 38 sind durch das Aufeinandertreffen je einer Seitenwand 20, 22 mit je einer Querwand 32, 34 definiert.

Ein Abstand des jeweiligen Haltezapfens 26, 28 von dem diesem Haltezapfen 26, 28 nahen Rand 36, 38 - oder von der entsprechenden Querwand 32, 34 - ist demnach um ein Vielfaches geringer als ein Abstand 40, welchen die beiden Haltezapfen 26, 28 voneinander aufweisen. Mit anderen Worten ist der Abstand 40 um ein Vielfaches größer als der Abstand des jeweiligen Haltezapfens 26, 28 von dem diesem Haltezapfen 26, 28 nahen Rand 36, 38.

Bei der in Fig. 1 gezeigten Variante des Filterelements 10 ist zudem der erste Haltezapfen 26 einer Unterkante 41 der ersten Seitenwand 20 näher als der zweite Haltezapfen 28. In analoger Weise gilt dies für die an der zweiten Seitenwand 22 angeordneten Haltezapfen. Im in das Gehäuse 12 der Luftfiltereinrichtung eingebauten Zustand des Filterelements 10 ist die Unterkante 41 der ersten Seitenwand 20 einer Umgebung 42 des Gehäuses 12 zugewandt, zu welcher hin der Aufnahmeraum 14 geöffnet ist (vergleiche Fig. 2).

Gemäß Fig. 2 weist das Gehäuse 12 eine erste Gehäusewand - oder genauer Gehäuse-Seitenwand - 44 auf, welcher der ersten Seitenwand 20 zugehörig beziehungsweise benachbart ist, wenn das Filterelement 10 in dem Aufnahmeraum 14 des Gehäuses 12 aufgenommen ist. Insbesondere liegt die erste Seitenwand 20 oder gegebenenfalls ein an der ersten Seitenwand 20 angeordnetes Dichtelement an einer Innenseite der ersten Gehäuse-Seitenwand 44 an, wenn das Filterelement 10 in das Gehäuse 12 eingebaut ist.

Des Weiteren weist das Gehäuse 12 eine zweite Gehäusewand - oder genauer Gehäuse-Seitenwand - 46 auf, welche der ersten Gehäusewand 44 in Querrichtung des Gehäuses 12 gegenüberliegt. In Fig. 2 ist diese Querrichtung durch einen Doppelpfeil 48 veranschaulicht, welcher dem Doppelpfeil 24 in Fig. 1 parallel ist.

In der ersten Gehäusewand 44 ist eine erste Kulisse 50 ausgebildet, von welcher in Fig. 2 lediglich eine obere Kontur erkennbar ist. Jedoch ist diese Kulisse 50 von der Formgebung her genauso ausgebildet wie eine zweite Kulisse 52, welche in der gegenüberliegenden zweiten Gehäusewand 46 des Gehäuses 12 ausgebildet ist. In der Draufsicht auf die Innenseite der Gehäusewand 46 erkennt man, dass die Kulisse 52 als Relief in der ansonsten geschlossenen Wand, deren Unterkante 60 zu sehen ist, ausgeformt ist.

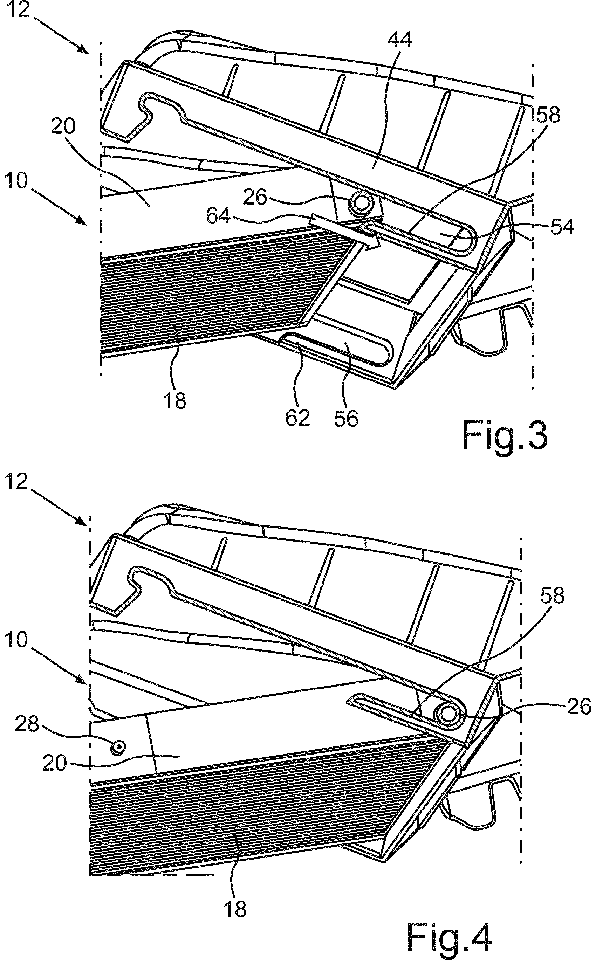

Fig. 3 zeigt die Konturen klarer, da hier die - an sich nach außen geschlossene - Gehäusewand 44 soweit geschnitten ist, dass die Konturen der in der Gehäusewand 44 reliefartig ausgeführten Kulisse 50 in Form des Führungsstegs 58 und eines Endbereichs - oder Kulissen-Endbereichs - 54 deutlich erkennbar sind.

Die erste Kulisse 50 erstreckt sich fast über die gesamte Länge der Gehäuse-Seitenwand 44 und ist in ihren gegenüberliegenden Kulissen-Endbereichen 54, 72 (vgl. Fig. 2) zum Aufnehmen der beiden Haltezapfen 26, 28 ausgebildet, welche an der ersten Seitenwand 20 des Filterelements 10 angeordnet sind. In analoger Weise ist die zweite Kulisse 52 zum Aufnehmen der an der zweiten Seitenwand 22 angeordneten Haltezapfen in den Endbereichen 56, 74 ausgebildet, wobei lediglich der größere Haltezapfen 30 in Fig. 1 erkennbar ist.

Aus Fig. 3 ist erkennbar, dass beim Einsetzen des Filterelements 10 in das Gehäuse 12 zunächst die größeren Vorsprünge oder Haltezapfen 26, 30 in einen jeweiligen Endbereich 54, 56 der jeweiligen Kulisse 50, 52 eingefädelt oder eingeschoben werden. Bei diesem Einschieben wird der erste Haltezapfen 26, 30 - vorliegend, aber nicht notwendig, mit größerem Durchmesser als der zweite Haltezapfen 28 - jeweils auf einem Führungssteg 58, 62 der jeweiligen Kulisse 50, 52 geführt. Durch die parallel zum Führungssteg 58, 62 verlaufende Oberkante der Führungskulisse 50, 52 entsteht über einen Bereich der Kulisse 50, 52 hinweg eine Schiene in der die Vorsprünge oder Haltezapfen 26, 30 kontrolliert geführt werden können.

Aus Fig. 2 ist diesbezüglich ersichtlich, dass sich dieser Führungssteg 58 entlang einer Unterkante 60 der in Fig. 3 geschnitten dargestellten ersten Gehäusewand 44 erstreckt. In analoger Weise liegt der den größeren Durchmesser aufweisende Haltezapfen 30 der zweiten Seitenwand 22 auf einem Führungssteg 62 auf, welcher der zweiten Kulisse 52 zugehörig ist (vergleiche Fig. 3). Ein Pfeil 64 veranschaulicht in Fig. 3 die Richtung, in welche die beiden Haltezapfen 26, 30 in die jeweiligen Endbereiche 54, 56 der zugehörigen Kulissen 50, 52 eingeschoben werden.

Das zu Beginn einer Montage des Filterelements erforderliche Einfädeln der Haltezapfen 26, 30 in die schienenartigen Bereiche der der Kulissen 50, 52 und auch das weitere Einschieben der Haltezapfen 26, 30 entlang der Führungsstege 58, 62 in die Kulissen-Endbereiche 54, 56 lässt sich vorliegend vorteilhaft auch dann sehr gut realisieren, wenn die Unterseite des Gehäuses 12, an welcher der Aufnahmeraum 14 ausgebildet ist, nicht oder nicht gut einsehbar ist.

Gemäß der Darstellung in Fig. 4 haben die jeweiligen Haltezapfen 26, 30, die hier größer sind, ihre Endlage in dem jeweiligen Kulissen-Endbereich oder Endbereich 54, 56 der Kulisse 50, 52 erreicht. Mit anderen Worten können die Führungszapfen oder Haltezapfen 26, 30 nicht weiter in die jeweiligen Endbereiche 54, 56 eingeschoben werden. Sobald eine Person, welche die Montage des Filterelements 10 vornimmt, so das Erreichen der Endlage feststellt, wird das Filterelement 10 - im Bild gesehen, nach oben - in das Gehäuse 12 beziehungsweise in den Aufnahmeraum 14 eingeschwenkt. Hierbei wird das Filterelement 10, beispielsweise an der noch frei zugänglichen vorderen Querwand 34 (vgl. Fig. 1), um eine zur hinteren Querwand 32 parallel verlaufenden Schwenkachse verschwenkt, welche durch die Haltezapfen 26, 30 mit dem größeren Durchmesser verläuft beziehungsweise durch die Haltezapfen 26, 30 gebildet ist.

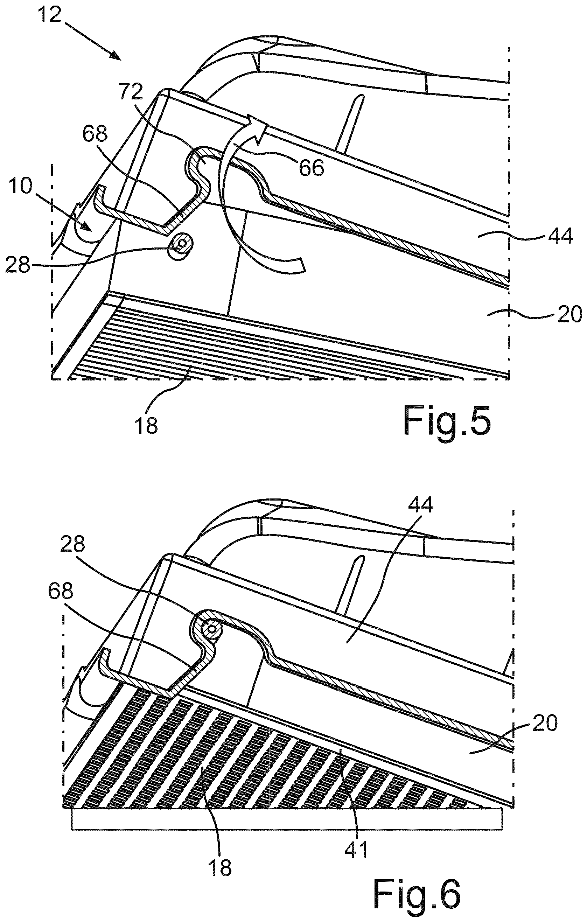

Die entsprechende Schwenkbewegung ist in Fig. 5 durch einen weiteren Pfeil 66 veranschaulicht. Wie aus Fig. 5 weiter ersichtlich ist, gerät durch dieses Einschwenken des Filterelements 10 in das Gehäuse 12 der zweite Haltezapfen 28 in Anlage mit einer schräg ausgerichteten Kulissen-Führungsflanke - oder kurz Führungsflanke - 68 der ersten Kulisse 50, welche in der ersten Gehäusewand 44 ausgebildet ist (vgl. Fig. 2).

In analoger Weise weist die zweite Kulisse 52, welche in der gegenüberliegenden, zweiten Gehäusewand 46 ausgebildet ist, eine solche schräg ausgerichtete Führungsflanke 70 auf (vergleiche Fig. 2). Mit dieser Führungsflanke 70 gerät der vorliegend kleine (nicht gezeigte) Haltezapfen in Anlage, welcher an der zweiten Seitenwand 22 ausgebildet ist, und von dieser zweiten Seitenwand 22 des Rahmens 16 parallel zu der Querrichtung nach außen absteht.

Wird der zweite Haltezapfen 28 an der nach Art einer Einführschräge ausgebildeten Führungsflanke 68 entlang - beispielsweise durch Druck auf die vordere Querwand 34 - in Richtung des Gehäuseinneren und nach oben geschoben, bewirkt das ein Stauchen beziehungsweise eine elastische Verformung der Seitenwand 20 des Rahmens 16. Hierbei verringert sich der Abstand 40 zwischen den Haltezapfen 26, 28. In analoger Weise kann die gegenüberliegende zweite Seitenwand 22 gestaucht beziehungsweise elastisch verformt werden. Dementsprechend verringert sich auch der Abstand der beiden Haltezapfen voneinander, welche an der zweiten Gehäusewand 22 angeordnet sind.

Der auf diese Weise zusammengestauchte Rahmen 16, welcher das Filtermaterial 18 hält, springt nach einem Erreichen eines Überdrückpunkts, also nach dem Erreichen des am weitesten einwärts - d.h. in Richtung der Mitte der entsprechenden Seitenwand - ragenden Punkt der jeweiligen Führungsflanke 68, 70, bei Erreichen der Höhe der Kulissen-Endbereiche 72, 74 wieder auseinander. Mit anderen Worten nimmt das Filterelement 10 wieder seinen in Fig. 1 gezeigten Ausgangszustand ein, in welchem die Seitenwände 20, 22 nicht elastisch verformt sind. Folglich gelangt - wie in Fig. 6 zu sehen - der zweite Haltezapfen 28 in den zweiten Endbereich 72 der ersten Kulisse 50, welcher in der ersten Gehäusewand 44 ausgebildet ist.

Dieser zweite Endbereich 72 der ersten Kulisse 50 ist in Fig. 2 lediglich von seiner Kontur her zu erkennen. Jedoch weist die zweite Kulisse 52, welche in der zweiten Gehäusewand 46 ausgebildet ist, einen entsprechenden zweiten Endbereich 74 auf. In dem jeweiligen Kulissen-Endbereich 72, 74 ist der jeweilige, dafür bestimmte oder zugeordnete Haltezapfen 28, wenn das Filterelement seine Betriebsposition erreicht hat, somit gegen ein Herausbewegen aus der Kulisse 50, 52 gesichert.

Dies ist auch aus der prinzipiellen Darstellung für einen Ausschnitt des in die Luftfiltereinrichtung eingebauten Filterelements 10 in Fig. 6 gut ersichtlich, wobei hier der an der ersten Seitenwand 20 angeordnete Haltezapfen 28 dargestellt ist.

Aus der Einbaulage oder Betriebsposition des Filterelements 10 im Aufnahmeraum 14 des Gehäuses 12, bei welcher die vier Haltezapfen 26, 28, 30 in den jeweiligen ihnen zugeordneten Kulissen-Endbereichen - oder Endlagen - 54, 56, 72, 74 der beiden Gehäuse-Seitenwände 44, 46 (in Fig. 6 nicht gezeigte) fixiert sind, kann das Filterelement 10 nur wieder durch elastisches Verformen der jeweiligen Seitenwände 20, 22 aus dem Gehäuse 12 entfernt werden. Durch einen händischen Eingriff in das Filtermaterial 18, das mit den Wänden 20, 22, 32, 34 des Filterelements 10 verbunden ist, und durch entsprechendes Zusammendrücken des Filterelements 10 kann der jeweilige Haltezapfen aus dem Endbereich 72, 74 der jeweiligen Kulisse 50, 52 entweder entlang der Führungsschräge 68, 70 herausbewegt werden, wie dies in Fig. 5 für den Haltezapfen 28 gezeigt ist, oder die Haltezapfen können durch Ziehen am Filtermaterial 18 orthogonal zum Verlauf der Kulissen 50, 52 aus den Endbereichen 54, 56, 72, 74 gezogen werden.

Dementsprechend lässt sich das Filterelement 10 einfach demontieren, indem zunächst der jeweilige Haltezapfen 28 aus dem jeweiligen Endbereich 72, 74 herausbewegt und dann das Filterelement 10 nach unten verschwenkt wird. Bei dieser Schwenkbewegung des Filterelements 10 wird der jeweilige Haltezapfen 28 zunächst gegen die entsprechende Führungsflanke 68, 70 gedrückt, bis die in Fig. 5 gezeigte Position des Filterelements 10 erreicht ist. Dann können die beiden - hier größeren - Haltezapfen 26, 28 aus den anderen Endbereichen 54, 56 der zugehörigen Kulissen 50, 52 herausgezogen werden, und zwar entgegen der durch den Pfeil 64 in Fig. 3 angegebenen Richtung.

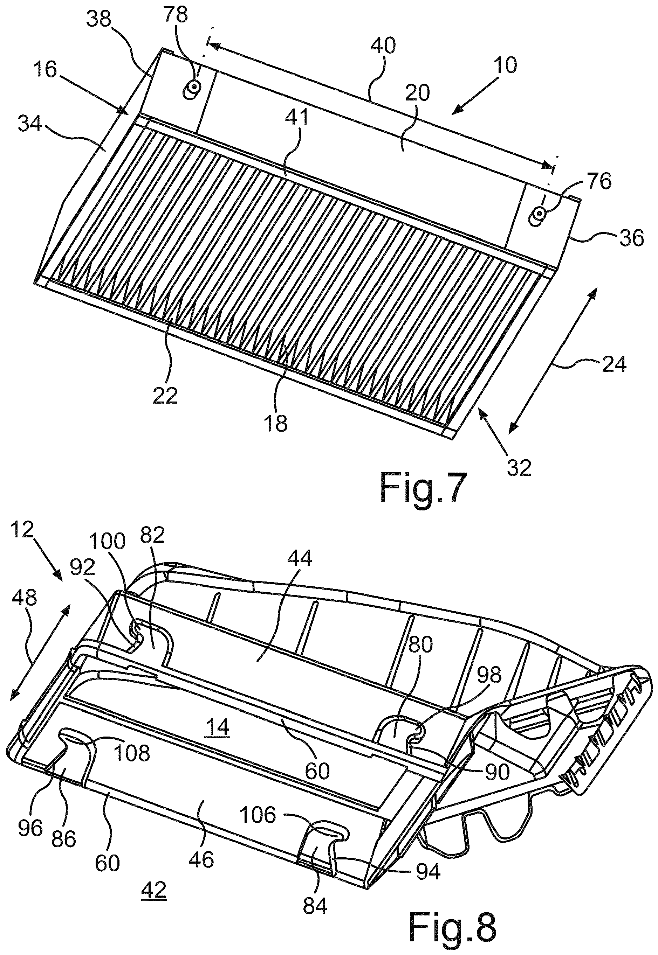

In Fig. 7 ist perspektivisch eine Variante des Filterelement 10 gezeigt, die in eine Variante des Gehäuses 12 eingebaut werden kann, die in Fig. 8 perspektivisch gezeigt ist. Auch hier ist in dem Gehäuse 12 der Aufnahmeraum 14 für das Filterelement 10 ausgebildet. Und auch bei der in Fig. 7 gezeigten Filterelement 10 sind an der ersten Seitenwand 20 zwei parallel zu der Querrichtung nach außen abstehende Vorsprünge in Form eines ersten Haltezapfens 76 und eines zweiten Haltezapfens 78 angeordnet. Die Querrichtung ist durch den Doppelpfeil 24 veranschaulicht.

So wie die erste Seitenwand 20 weist auch die in der Querrichtung der ersten Seitenwand 20 gegenüberliegende zweite Seitenwand 22 des Rahmens 16 zwei (nicht gezeigte) Haltezapfen auf, welche ebenfalls parallel zu der Querrichtung von der zweiten Seitenwand 22 nach außen abstehen.

Auch bei der in Fig. 7 gezeigten Variante des Filterelements 10 kann ein Abstand 40 zwischen den Haltezapfen 76, 78 durch Verformen der Seitenwand 20 verringert werden. Dies gilt in analoger Weise für den Abstand zwischen den an der zweiten Seitenwand 22 angeordneten Haltezapfen. Und auch bei dieser Variante können die Haltezapfen 76, 78 mit der jeweiligen Seitenwand 20, 22 verklebt oder verschweißt, insbesondere durch Ultraschallschweißen verbunden, oder einstückig mit der jeweiligen Seitenwand 20, 22 ausgebildet sein.

Bei der in Fig. 7 gezeigten Variante des Filterelements 10 weisen die Haltezapfen 76, 78 gleiche Außenmaße beziehungsweise gleich große Durchmesser auf, wobei - bei entsprechender Ausgestaltung der zu den Haltezapfen 76, 78 gehörigen Kulissen-Endbereiche 98,100 - auch unterschiedliche Abmessungen der Haltezapfen 76, 78 vorgesehen sein können, so wie umgekehrt auch die in den Figuren 1 bis 6 gezeigten Ausführungsformen mit gleich großen Haltezapfen 26, 28, 30 bei geeigneten Kulissen-Endbereichen 52, 54, 72, 74 gestaltet sein können.

Bei der in Fig. 8 gezeigten Variante des Gehäuses 12 weisen die einander gegenüberliegenden Gehäuse-Seitenwände 44, 46 jeweils zwei kurze Kulissen 80, 82, 84, 86 auf, die separat in der jeweiligen Gehäusewand 44, 46 - wiederum in der Art eines Reliefs - ausgebildet sind. Von den beiden Kulissen 80, 82, welche durch die erste Gehäusewand 44 bereitgestellt oder in der ersten Gehäusewand 44 ausgebildet sind, sind in der perspektivischen Ansicht gemäß Fig. 8 lediglich die äußeren Konturen ersichtlich. Diese Kulissen 80, 82 sind jedoch von der Gestalt her genauso ausgebildet wie die in der zweiten Gehäusewand 46 bereitgestellten oder ausgebildeten beiden Kulissen 84, 86.

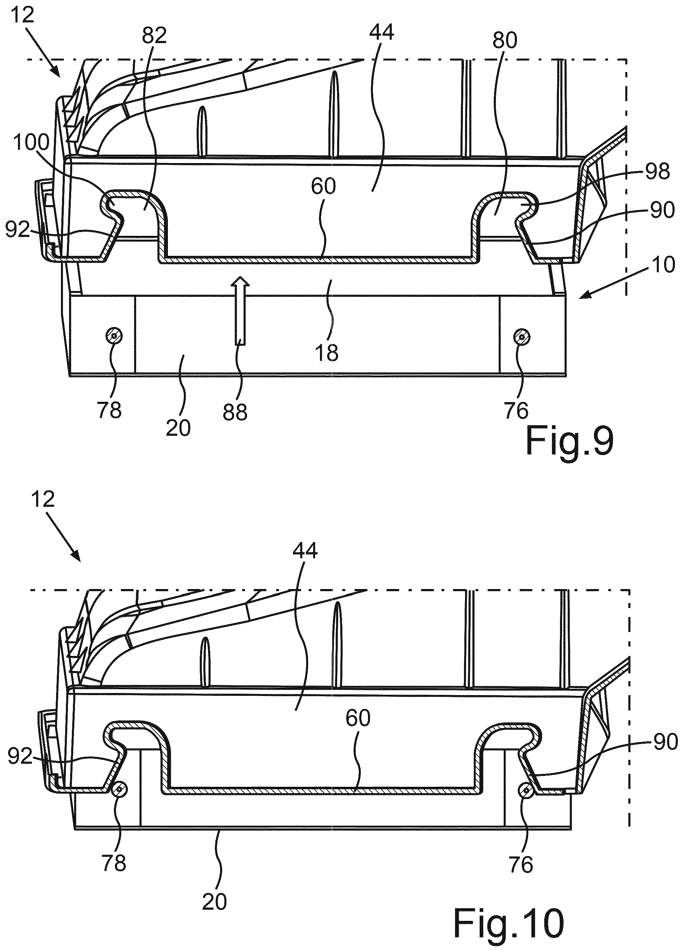

Gemäß Fig. 9 kann der Einbau des Filterelements 10 in den Aufnahmeraum 14 des Gehäuses 12 das Filterelement 10 im Wesentlichen auch so erfolgen, wie für die Ausführungsform der Figuren 1 bis 6, indem zunächst je zwei an gegenüberliegenden Seitenwänden 20, 22 abstehende Haltezapfen 76 bzw. 78 zur Bildung einer Schwenkachse in die ihnen zugedachten Kulissen-Endbereiche 98, 106 bzw. 100, 108 eingeführt werden, und sodann die anderen beiden Haltezapfen 78 bzw. 76 - wie oben beschrieben - in die ihnen zugeordneten Kulissen-Endbereiche 100, 108 bzw. 98, 106 eingebracht werden.

Andererseits ermöglicht die in den Figuren 9 bis 11 gezeigte Ausführungsform auch ein Einsetzen des Filterelements 10 senkrecht von unten in den Aufnahmeraum 14, wobei die vier Haltezapfen 76, 78 am Filterelement 10 gleichzeitig bis in die ihnen zugeordneten Kulissen-Endbereiche 98, 100, 106, 108 geschoben werden. Die Einschubbewegung ist hierbei senkrecht zu einer Ebene, welche durch den Abstand 40 der Haltezapfen 76, 78 und die durch den Doppelpfeil 24 in Fig. 7 veranschaulichte Querrichtung aufgespannt ist. Eine entsprechende Einführrichtung ist in Fig. 9 durch einen Pfeil 88 veranschaulicht. Auch dieses Einsetzen des Filterelements 10 in das Gehäuse 12 lässt sich von einer Bedienperson einfach vornehmen, ohne dass die Unterseite des Gehäuses 12, also die der Umgebung 42 zugewandte Seite des Aufnahmeraums 14, unbedingt einsehbar sein muss, da durch die unterstützende Führung der Haltezapfen 76, 78 in den Kulissen 80, 82, 84, 86 eine intuitive Bedienung möglich ist, in dem alle vier Kulissen 80, 82, 84, 86 nach unten - in einem korrespondierenden Bereich des Kulissen-Reliefs in der Gehäuse-Seitenwand 44, 46 - zur Aufnahme der Haltezapfen 76, 78 offen sind, so dass auch eine haptische Rückmeldung ermöglicht ist, sobald das Filterelement 10 für den Einbau korrekt ausgerichtet ist.

Gemäß Fig. 10 gelangen durch dieses Einfädeln beziehungsweise Einschieben des Filterelements 10 in das Gehäuse 12 die beiden Haltezapfen 76, 78 mit jeweiligen, nach Art von Führungsschrägen ausgebildeten Führungsflanken 90, 92 der für die Haltezapfen 76, 78 vorgesehenen Kulissen 80, 82 in Anlage. In Fig. 8 ist die Führungsflanke 90 der ersten Kulisse 80 lediglich von ihrer Kontur her erkennbar, da hier die ungeschnittene Gehäusewand 44 gezeigt ist, die nach außen hin geschlossen ist, ebenso wie die Führungsflanke 92 der zweiten Kulisse 82, welche durch die erste Gehäuse-Seitenwand 44 bereitgestellt ist.

Aus der teilweise geschnittenen Darstellung der Kulissen 80, 82 in Fig. 10 ist besonders gut ersichtlich, dass die beiden Führungsflanken 90, 92 schräg zueinander ausgerichtet sind. Dementsprechend ist ein Abstand dieser beiden Kulissen-Führungsflanken 90, 92 voneinander im Bereich der Unterkante 60 der ersten Gehäusewand 44 (vergleiche Fig. 8) größer als in einer größeren Entfernung von dieser Unterkante 60. Diese schräge Ausrichtung der beiden Führungsflanken 90, 92 zueinander bewirkt, dass beim Einbringen des Filterelements 10 in den Aufnahmeraum 14 durch Nach-Oben-Schieben die Seitenwand 20 elastisch verformt wird. Hierbei wird der Abstand 40 zwischen den beiden Haltezapfen 76, 78 verringert.

In analoger Weise weisen die beiden in der zweiten Gehäusewand 46 ausgebildeten Kulissen 84, 86 derartige, nach Art von Einführschrägen ausgebildete Führungsflanken 94, 96 auf (vergleiche Fig. 8). Auch hier ist die Führungsflanke 94 der ersten Kulisse 84 schräg ausgerichtet so wie auch die Führungsflanke 96 der zweiten Kulisse 86. Die schräge Ausrichtung dieser beiden Führungsflanken 94, 96 zueinander bewirkt, dass die an der zweiten Seitenwand 22 des Rahmens 16 angeordneten (nicht gezeigten) Vorsprünge beziehungsweise Haltezapfen beim Einschieben des Filterelements 10 in den Aufnahmeraum 14 aufeinander zu bewegt werden, indem die zweite Seitenwand 22 elastisch verformt wird.

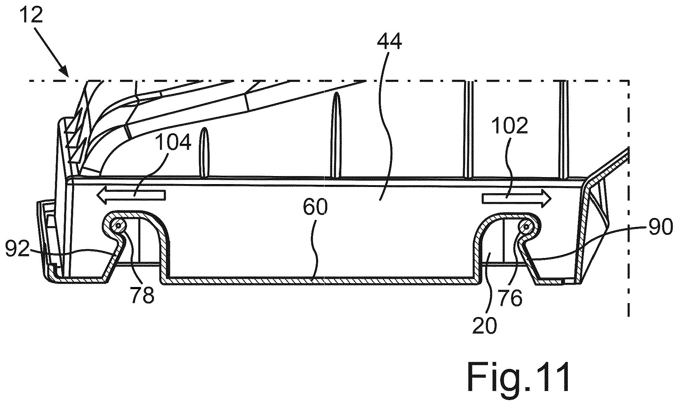

Aus Fig. 11 ist ersichtlich, dass nach dem Zusammenstauchen der beiden einander gegenüberliegenden Seitenwände 20, 22 der Rahmen 16 wieder seine in Fig. 7 gezeigte Form beziehungsweise den in Fig. 7 gezeigten Ausgangszustand erreicht. Hierbei gelangt nach der elastischen Verformung der jeweiligen Seitenwand 20, 22 der erste Haltezapfen 76 in einen Endbereich 98 der ersten Kulisse 80 (vergleiche Fig. 9), welche in der ersten Gehäusewand 44 ausgebildet ist.

In analoger Weise gelangt der zweite Haltezapfen 78 in einen Endbereich 100 der zweiten Kulisse 82, welche ebenfalls in der ersten Gehäusewand 44 ausgebildet ist (vergleiche Fig. 9). Es ist ersichtlich, dass diese Kulissen-Endbereiche 98, 100 sich in einander entgegengesetzte Richtungen erstrecken. Das Bewegen der an derselben Seitenwand 20 angeordneten Haltezapfen 76, 78 in die Endbereiche 98, 100 hinein ist in Fig. 11 durch entsprechende Pfeile 102, 104 veranschaulicht.

In analoger Weise erstreckt sich ein Endbereich 106 der in der zweiten Gehäusewand 46 ausgebildeten ersten Kulisse 84 in eine Richtung, welche derjenigen Richtung entgegengesetzt ist, in welche sich ein Endbereich 100 der in der zweiten Gehäusewand 46 ausgebildeten zweiten Kulisse 86 erstreckt (vergleiche Fig. 8). Indem auch die an der zweiten Seitenwand 22 angeordneten (nicht gezeigten) Haltezapfen in diese Endbereiche 106, 108 gelangen, ist das Filterelement 10 zuverlässig in der vorbestimmten Einbauposition in dem Aufnahmeraum 14 des Gehäuses 12 aufgenommen.

Sowohl bei der mit Bezug auf Fig. 1 bis Fig. 6 beschriebenen Variante der Luftfiltereinrichtung als auch bei der mit Bezug auf Fig. 7 bis Fig. 11 erläuterten Variante wird die Eigenelastizität des Filter-Rahmens 16, insbesondere der einander gegenüberliegenden Seitenwände 20, 22, genutzt, um die Vorsprünge insbesondere in Form der Haltezapfen 26, 28, 30, 76, 78 in ihre jeweilige Endlage in den Kulissen-Endbereichen 72, 74, 98, 100, 106, 108 zu verbringen.

Bei der anhand von Fig. 1 bis Fig. 6 erläuterten Variante wird das Filterelement 10 zunächst schräg nach hinten entlang der Kulissen 50, 52 bis in die Endlage geschoben und dann in das Gehäuse 12 geklappt und ist dann in dem Aufnahmeraum 14 gesichert gelagert.

Bei der mit Bezug auf Fig. 7 bis Fig. 11 beschriebenen Variante kann demgegenüber auch so verfahren werden, dass die Haltezapfen 76, 78 des Filterelements 10 von unten in die jeweiligen Kulissen 80, 82, 84, 86 eingeführt werden. Nach der Wiederausdehnung der Seitenwände 20, 22 des Filterelements 10 erreichen die Haltezapfen 76, 78 ihre jeweilige Endlage in den jeweiligen Endbereichen 98, 100, 106, 108. Sodann ist das Filterelement 10 in dem Aufnahmeraum 14 des Gehäuses 12 funktionsfähig in seiner Betriebsposition.

## Patentansprüche

1. Luftfiltereinrichtung für einen Kraftwagen, mit einem Gehäuse (12) mit einem Aufnahmeraum (14) für ein Filterelement (10),
wobei das Filterelement (10) einen Rahmen (16) aufweist, welcher ein Filtermaterial (18) des Filterelements (10) zumindest bereichsweise umgibt, wobei der Rahmen (16) eine erste Seitenwand (20) und gegenüberliegend eine zweite Seitenwand (22) sowie eine erste und gegenüberliegend eine zweite, die Seitenwände verbindende Querwand (32, 34) umfasst,
wobei von jeder Seitenwand (20, 22) nahe einer der beiden Querwände (32, 34) je ein erster Vorsprung (26, 30, 76, 78) absteht,
und wobei das Gehäuse (12) zwei gegenüberliegende Gehäuse-Seitenwände (44, 46) umfasst, die beide wenigstens je eine Kulisse (50, 52, 80, 82, 84, 86) aufweisen, in welcher der jeweils erste Vorsprung (26, 30, 76, 78) der jeweiligen Seitenwand (20, 22) des Filterelements (10) in jeweils einen in eine erste Richtung (64, 102, 104) weisenden ersten Kulissen-Endbereich (54, 56, 72, 74, 98, 100, 106, 108) einsetzbar ist,
**dadurch gekennzeichnet dass**,
von den Seitenwänden (20, 22) je ein zweiter Vorsprung (28, 76, 78) nahe der anderen der beiden Querwände (32, 34) absteht, und die Gehäuse-Seitenwände (44, 46) je einen - in eine entgegen der ersten Richtung (64, 102, 104) weisenden - zweiten Kulissen-Endbereich (72, 74, 98, 100, 106, 108) aufweisen, in welche die zweiten Vorsprünge (28, 76, 78) einsetzbar sind, so dass sich das Filterelement (10) im Aufnahmeraum (14) des Gehäuses (12) in seiner Betriebsposition befindet, und wobei die Seitenwände (20, 22) elastisch verformbar sind, so dass ein Abstand (40) der beiden an derselben Seitenwand (20, 22) angeordneten Vorsprünge (26, 28, 30, 76, 78) voneinander verringerbar ist, um die jeweils zweiten Vorsprünge (28, 76, 78) beim Einsetzen an einwärts gerichteten Kulissen-Führungsflanken (68, 70, 92, 96, 90, 94) vorbei in den ihnen zugeordneten zweiten Kulissen-Endbereich (72, 74, 98, 100, 106, 108) zu bringen.

2. Luftfiltereinrichtung nach Anspruch 1,
**dadurch gekennzeichnet, dass**
die wenigstens eine Kulisse (50, 52) der jeweiligen Gehäuse-Seitenwand (44, 46) einen Führungssteg (58, 62) aufweist, entlang welchem der erste Vorsprung (26, 30) der jeweils entsprechenden Seitenwand (20, 22) des Filterelements (10) beim Einsetzen des Filterelements (10) in den Aufnahmeraum (14) in den ersten Endbereich (54, 56) der Kulisse (50, 52) führbar ist, wobei sich der Führungssteg (58, 62) entlang einer Unterkante (60) der jeweiligen Gehäusewand (44, 46) erstreckt.

3. Luftfiltereinrichtung nach Anspruch 1,
**dadurch gekennzeichnet, dass**
beide Gehäuse-Seitenwände (44, 46) je zwei separate Kulissen (80, 82, 84, 86) aufweisen, welche einander, in Richtung des Abstands (40) der an der zugehörigen Seitenwand (20, 22) des Filterelements (10) angeordneten Vorsprünge (76, 78), gegenüberliegende und schräg zueinander verlaufende Führungsflanken (90, 92, 94, 96) aufweisen, wobei die Führungsflanken (90, 92, 94, 96) dazu ausgebildet sind, beim Einsetzen des Filterelements (10) in den Aufnahmeraum (14) das elastische Verformen der jeweiligen Seitenwand (20, 22) zur Verringerung des Abstands (40) der beiden Vorsprünge zu unterstützen.

4. Luftfiltereinrichtung nach Anspruch 3,
**dadurch gekennzeichnet, dass**
sich die Kulissen-Endbereiche (98, 100, 106, 108) der beiden Kulissen (80, 82, 84, 86) der jeweiligen Gehäuse-Seitenwand (44, 46) unmittelbar an die jeweiligen Kulissen-Führungsflanken (90, 92, 94, 96) anschließen, wobei sich die Endbereiche (98, 100, 106, 108) in auseinander weisende Richtungen erstrecken.

5. Filterelement zum Einsetzen in einen Aufnahmeraum (14) eines Gehäuses (12) einer Luftfiltereinrichtung eines Kraftwagens nach einem der Ansprüche 1 bis 4, wobei das Filterelement (10) einen Rahmen (16) aufweist, welcher ein Filtermaterial (18) des Filterelements (10) zumindest bereichsweise umgibt, wobei der Rahmen (16) eine erste Seitenwand (20) und gegenüberliegend eine zweite Seitenwand (22) sowie eine erste und gegenüberliegend eine zweite, die Seitenwände verbindende Querwand (32, 34) umfasst,
wobei von jeder Seitenwand (20, 22) nahe einer der beiden Querwände (32, 34) je ein erster Vorsprung (26, 30, 76, 78) absteht,
wobei der jeweils erste Vorsprung (26, 30, 76, 78) der jeweiligen Seitenwand (20, 22) des Filterelements (10) in jeweils einen in eine erste Richtung (64, 102, 104) weisenden ersten Kulissen-Endbereich (54, 56, 72, 74, 98, 100, 106, 108) wenigstens je einer Kulisse (50, 52, 80, 82, 84, 86) einsetzbar ist, welche in zwei gegenüberliegenden Gehäuse-Seitenwänden (44, 46) des Gehäuses (12) ausgebildet sind,
wobei von den Seitenwänden (20, 22) je ein zweiter Vorsprung (28, 76, 78) nahe der anderen der beiden Querwände (32, 34) absteht, wobei die zweiten Vorsprünge (28, 76, 78) in je einen - in eine entgegen der ersten Richtung (64, 102, 104) weisenden - zweiten Kulissen-Endbereich (72, 74, 98, 100, 106, 108) der Gehäuse-Seitenwände (44, 46) einsetzbar sind, so dass sich das Filterelement (10) im Aufnahmeraum (14) des Gehäuses (12) in seiner Betriebsposition befindet, und wobei die Seitenwände (20, 22) elastisch verformbar sind, so dass ein Abstand (40) der beiden an derselben Seitenwand (20, 22) angeordneten Vorsprünge (26, 28, 30, 76, 78) voneinander verringerbar ist, um die jeweils zweiten Vorsprünge (28, 76, 78) beim Einsetzen an einwärts gerichteten Kulissen-Führungsflanken (68, 70, 92, 96, 90, 94) vorbei in den ihnen zugeordneten zweiten Kulissen-Endbereich (72, 74, 98, 100, 106, 108) zu bringen, und wobei der zum Einsetzen des Filterelements (10) in den Aufnahmeraum (14) des Gehäuses (12) verringerbare Abstand (40) der beiden an der jeweiligen elastisch verformbaren Seitenwand (20, 22) angeordneten Vorsprünge (26, 28, 30, 76, 78) im unverformten Zustand einem Abstand der ihnen gehäuseseitig zugedachten Kulissen-Endbereiche (54, 56, 72, 74, 98, 100, 106, 108) der jeweiligen Gehäuse-Seitenwand (44, 46) entspricht.

6. Filterelement nach Anspruch 5,
**dadurch gekennzeichnet, dass**
die beiden an der jeweiligen Seitenwand (20, 22) angeordneten Vorsprünge (26, 28, 30, 76, 78) in einem nicht verformten Ausgangszustand des Filterelements (10) der jeweiligen Seitenwand (20, 22) einen Abstand (40) voneinander aufweisen, welcher um ein Vielfaches größer ist als ein Abstand eines jeweiligen der beiden Vorsprünge (26, 28, 30, 76, 78) von einem Rand (36, 38) der Seitenwand (20, 22), welcher diesem Vorsprung (26, 28, 30, 76, 78) nahe ist.

7. Filterelement nach Anspruch 6,
**dadurch gekennzeichnet, dass**
ein erster der beiden an derselben Seitenwand (20, 22) angeordneten Vorsprünge (26, 28, 30, 76, 78) ein größeres Außenmaß, insbesondere einen größeren Durchmesser, aufweist als ein zweiter der beiden an dieser Seitenwand (20, 22) angeordneten Vorsprünge (26, 28, 30, 76, 78).

8. Filterelement nach Anspruch 6,
**dadurch gekennzeichnet, dass**
ein erster der beiden an derselben Seitenwand (20, 22) angeordneten Vorsprünge (26, 28, 30, 76, 78) einer Unterkante (41) der Seitenwand (20, 22) näher ist als ein zweiter der beiden an dieser Seitenwand (20, 22) angeordneten Vorsprünge (28, 76. 78).

9. Filterelement nach einem der Ansprüche 5 bis 8,
**dadurch gekennzeichnet, dass**
die Seitenwände (20, 22), welche die Vorsprünge (26, 28, 30, 76, 78) aufweisen, eine geringere Steifigkeit, insbesondere eine geringere Dicke, aufweisen als die Querwände (32, 34).

## Claims

1. Air filter device for a motor vehicle, comprising a housing (12) having a receiving space (14) for a filter element (10),
the filter element (10) comprising a frame (16) which surrounds a filter material (18) of the filter element (10) at least in regions, the frame (16) having a first side wall (20) and a second side wall (22) opposite and a first and, opposite, a second transverse wall (32, 34) connecting the side walls,
a first projection (26, 30, 76, 78) protruding from each side wall (20, 22) close to one of the two transverse walls (32, 34),
and the housing (12) comprising two opposite housing side walls (44, 46) which both have at least one slot (50, 52, 80, 82, 84, 86) in which the relevant first projection (26, 30, 76, 78) of each side wall (20, 22) of the filter element (10) can be inserted into a relevant first slot end region (54, 56, 72, 74, 98, 100, 106, 108) pointing in a first direction (64, 102, 104),
**characterized in that**
a second projection (28, 76, 78) projects from each of the side walls (20, 22) close to the other of the two transverse walls (32, 34), and the housing side walls (44, 46) each have a second slot end region (72, 74, 98, 100, 106, 108), pointing counter to the first direction (64, 102, 104), in which the second projections (28, 76, 78) can be inserted, so that the filter element (10) is located in the receiving space (14) of the housing (12) in its operating position, and the side walls (20, 22) being elastically deformable, so that a spacing (40) from one another of the two projections (26, 28, 30, 76, 78) arranged on the same side wall (20, 22) can be reduced in order to bring the relevant second projections (28, 76, 78) past inwardly directed slot guide flanks (68, 70, 92, 96, 90, 94) into the second slot end region (72, 74, 98, 100, 106, 108) assigned thereto during insertion.

2. Air filter device according to claim 1,
**characterized in that**
the at least one slot (50, 52) of the relevant housing side wall (44, 46) has a guide strip (58, 62) along which the first projection (26, 30) of the relevant corresponding side wall (20, 22) of the filter element (10) can be guided into the first end region (54, 56) of the slot (50, 52) when the filter element (10) is inserted into the receiving space (14), the guide strip (58, 62) extending along a lower edge (60) of the relevant housing wall (44, 46).

3. Air filter device according to claim 1,
**characterized in that**
the two housing side walls (44, 46) each have two separate slots (80, 82, 84, 86), which have guide flanks (90, 92, 94, 96) that are opposite one another in the direction of the spacing (40) of the projections (76, 78) arranged on the associated side wall (20, 22) of the filter element and extend obliquely with respect to one another, the guide flanks (90, 92, 94, 96) being designed to support the elastic deformation of the relevant side wall (20, 22) in order to reduce the spacing (40) of the two projections when the filter element (10) is inserted into the receiving space (14).

4. Air filter device according to claim 3,
**characterized in that**
the slot end regions (98, 100, 106, 108) of the two slots (80, 82, 84, 86) of the relevant housing side wall (44, 46) directly adjoin the relevant slot guide flanks (90, 92, 94, 96), the end regions (98, 100, 106, 108) extending in directions pointing away from one another.

5. Filter element for insertion into a receiving space (14) of a housing (12) of an air filter device of a motor vehicle according to any of claims 1 to 4, wherein the filter element (10) has a frame (16) which surrounds a filter material (18) of the filter element (10) at least in regions, wherein the frame (16) comprises a first side wall (20) and a second side wall (22) opposite and a first and, opposite, a second transverse wall (32, 34) connecting the side walls,
wherein a first projection (26, 30, 76, 78) protrudes from each side wall (20, 22) close to one of the two transverse walls (32, 34),
wherein the relevant first projection (26, 30, 76, 78) of each side wall (20, 22) of the filter element (10) can be inserted into a first slot end region (54, 56, 72, 74, 98, 100, 106, 108), which points in a first direction (64, 102, 104), at least for one slot (50, 52, 80, 82, 84, 86), which slot is formed in two opposite housing side walls (44, 46) of the housing (12),
wherein a second projection (28, 76, 78) projects from each of the side walls (20, 22) close to the other of the two transverse walls (32, 34), wherein the second projections (28, 76, 78) can each be inserted into a second slot end region (72, 74, 98, 100, 106, 108), pointing counter to the first direction (64, 102, 104), of the housing side walls (44, 46), so that the filter element (10) is located in the receiving space (14) of the housing (12) in its operating position, and wherein the side walls (20, 22) are elastically deformable, so that a spacing (40) from one another of the two projections (26, 28, 30, 76, 78) arranged on the same side wall (20, 22) can be reduced in order to bring the relevant second projections (28, 76, 78) past inwardly directed slot guide flanks (68, 70, 92, 96, 90, 94) into the second slot end region (72, 74, 98, 100, 106, 108) assigned thereto during insertion, and wherein the spacing (40) of the two projections (26, 28, 30, 76, 78) arranged on the relevant elastically deformable side wall (20, 22), which spacing can be reduced for the insertion of the filter element (10) into the receiving space (14) of the housing (12), corresponds in the undeformed state to a spacing of the slot end regions (54, 56, 72, 74, 98, 100, 106, 108) of the relevant housing side wall (44, 46) which are intended therefor on the housing side.

6. Filter element according to claim 5,
**characterized in that**
the two projections (26, 28, 30, 76, 78) arranged on the relevant side wall (20, 22) have, in a non-deformed initial state of the filter element (10) of the relevant side wall (20, 22), a spacing (40) from one another which is several times greater than a spacing of one of the two projections (26, 28, 30, 76, 78) from an edge (36, 38) of the side wall (20, 22), which is close to this projection (26, 28, 30, 76, 78).

7. Filter element according to claim 6,
**characterized in that**
a first of the two projections (26, 28, 30, 76, 78) arranged on the same side wall (20, 22) has a larger external dimension, in particular a larger diameter, than a second of the two projections (26, 28, 30, 76, 78) arranged on this side wall (20, 22).

8. Filter element according to claim 6,
**characterized in that**
a first of the two projections (26, 28, 30, 76, 78) arranged on the same side wall (20, 22) is closer to a lower edge (41) of the side wall (20, 22) than a second of the two projections (28, 76, 78) arranged on this side wall (20, 22).

9. Filter element according to any of claims 5 to 8,
**characterized in that**
the side walls (20, 22), which have the projections (26, 28, 30, 76, 78), have a lower stiffness, in particular a lower thickness, than the transverse walls (32, 34).

## Revendications

1. Dispositif de filtre à air pour un véhicule automobile, comportant un boîtier (12) comportant un espace de logement (14) pour un élément filtre (10),
l'élément filtre (10) présentant un cadre (16), qui entoure au moins partiellement un matériau de filtre (18) de l'élément filtre (10), le cadre (16) comprenant une première paroi latérale (20) et, en face de celle-ci, une deuxième paroi latérale (22) ainsi que qu'une première et, en face de celle-ci, une deuxième paroi transversale (32, 34) reliant les parois latérales,
une première saillie (26, 30, 76, 78) faisant respectivement saillie à partir de chaque paroi latérale (20, 22) à proximité de l'une des deux parois transversales (32, 34),
et le boîtier (12) comprenant deux parois latérales de boîtier (44, 46) opposées, qui présentent toutes les deux respectivement au moins une coulisse (50, 52, 80, 82, 84, 86), dans laquelle peut être insérée la première saillie (26, 30, 76, 78) respective de la paroi latérale (20, 22) respective de l'élément filtre (10) dans une première zone d'extrémité de coulisse (54, 56, 72, 74, 98, 100, 106, 108) respective, orientée dans un premier sens (64, 102, 104),
**caractérisé en ce qu'**
une deuxième saillie (28, 76, 78) fait respectivement saillie à partir des parois latérales (20, 22) à proximité de l'autre des deux parois transversales (32, 34) et les parois latérales de boîtier (44, 46) présentent respectivement une deuxième zone d'extrémité de coulisse (72, 74, 98, 100, 106, 108) - orientée dans un sens opposé au premier sens (64, 102, 104) - dans laquelle les deuxièmes saillies (28, 76, 78) peuvent être insérées de sorte que l'élément filtre (10) se trouve dans sa position de fonctionnement dans l'espace de logement (14) du boîtier (12) et les parois latérales (20, 22) étant élastiquement déformables de sorte qu'une distance (40) entre les deux saillies (26, 28, 30, 76, 78) agencées sur la même paroi latérale (20, 22) peut être réduite afin d'amener les deuxièmes saillies (28, 76, 78) respectives, lors de l'insertion, au-delà de flancs de guidage de coulisse (68, 70, 92, 96, 90, 94) orientés vers l'intérieur dans la deuxième zone d'extrémité de coulisse (72, 74, 98, 100, 106, 108) qui leur est associée.

2. Dispositif de filtre à air selon la revendication 1,
**caractérisé en ce que**
l'au moins une coulisse (50, 52) de la paroi latérale de boîtier (44, 46) respective présente une âme de guidage (58, 62), le long de laquelle la première saillie (26, 30) de la paroi latérale correspondante (20, 22) respective de l'élément filtre (10) peut être guidée lors de l'insertion de l'élément filtre (10) dans l'espace de logement (14) dans la première zone d'extrémité (54, 56) de la coulisse (50, 52), l'âme de guidage (58, 62) s'étendant le long d'un bord inférieur (60) de la paroi de boîtier (44, 46) respective.

3. Dispositif de filtre à air selon la revendication 1,
**caractérisé en ce que**
les deux parois latérales de boîtier (44, 46) présentent respectivement deux coulisses séparées (80, 82, 84, 86), qui présentent des flancs de guidage (90, 92, 94, 96) opposés l'un à l'autre et s'étendant en biais l'un vers l'autre, en direction de la distance (40) entre les saillies (76, 78) agencées au niveau de la paroi latérale associée (20, 22) de l'élément filtre (10), les flancs de guidage (90, 92, 94, 96) étant conçus pour soutenir, lors de l'insertion de l'élément filtre (10) dans l'espace de logement (14), la déformation élastique de la paroi latérale (20, 22) respective en vue de la diminution de la distance (40) entre les deux saillies.

4. Dispositif de filtre à air selon la revendication 3,
**caractérisé en ce que**
les zones d'extrémité de coulisse (98, 100, 106, 108) des deux coulisses (80, 82, 84, 86) de la paroi latérale de boîtier (44, 46) respective se raccordent directement aux flancs de guidage de coulisse (90, 92, 94, 96) respectifs, les zones d'extrémité (98, 100, 106, 108) s'étendant dans des sens s'écartant l'un de l'autre.

5. Élément filtre destiné à être inséré dans un espace de logement (14) d'un boîtier (12) d'un dispositif de filtre à air d'un véhicule automobile selon l'une des revendications 1 à 4, l'élément filtre (10) présentant un cadre (16), qui entoure au moins partiellement un matériau de filtre (18) de l'élément filtre (10), le cadre (16) comprenant une première paroi latérale (20) et, en face de celle-ci, une deuxième paroi latérale (22) ainsi que qu'une première et, en face de celle-ci, une deuxième paroi transversale (32, 34) reliant les parois latérales,
une première saillie (26, 30, 76, 78) faisant respectivement saillie à partir de chaque paroi latérale (20, 22) à proximité de l'une des deux parois transversales (32, 34),
la première saillie (26, 30, 76, 78) respective de la paroi latérale (20, 22) respective de l'élément filtre (10) pouvant être insérée dans une première zone d'extrémité de coulisse (54, 56, 72, 74, 98, 100, 106, 108) respective orientée dans un premier sens (64, 102, 104) respectivement d'au moins une coulisse (50, 52, 80, 82, 84, 86), qui sont conçues dans deux parois latérales de boîtier (44, 46) opposées du boîtier (12),
une deuxième saillie (28, 76, 78) faisant respectivement saillie à partir des parois latérales (20, 22) à proximité de l'autre des deux parois transversales (32, 34), les deuxièmes saillies (28, 76, 78) pouvant être insérées dans respectivement une deuxième zone d'extrémité de coulisse (72, 74, 98, 100, 106, 108) - orientée dans un sens opposé au premier sens (64, 102, 104) - des parois latérales de boîtier (44, 46), de telle sorte que l'élément filtre (10) se trouve dans sa position de fonctionnement dans l'espace de logement (14) du boîtier (12) et les parois latérales (20, 22) étant élastiquement déformables de sorte qu'une distance (40) entre les deux saillies (26, 28, 30, 76, 78) agencées sur la même paroi latérale (20, 22) peut être réduite afin d'amener les deuxièmes saillies (28, 76, 78) respectives, lors de l'insertion, au-delà de flancs de guidage de coulisse (68, 70, 92, 96, 90, 94) orientés vers l'intérieur, dans la deuxième zone d'extrémité de coulisse (72, 74, 98, 100, 106, 108) qui leur est associée et dans laquelle la distance (40) entre les deux saillies (26, 28, 30, 76, 78) agencées au niveau de la paroi latérale (20, 22) élastiquement déformable respective pouvant être diminuée en vue de l'insertion de l'élément filtre (10) dans l'espace de logement (14) du boîtier (12) correspondant, dans l'état non déformé, à une distance entre les zones d'extrémité de coulisse (54, 56, 72, 74, 98, 100, 106, 108) assignée côté boîtier de la paroi latérale de boîtier (44, 46) respective.

6. Élément filtre selon la revendication 5,
**caractérisé en ce que**
les deux saillies (26, 28, 30, 76, 78) agencées au niveau de la paroi latérale (20, 22) respective, présentent, dans un état de départ non déformé de l'élément filtre (10) de la paroi latérale (20, 22) respective, une distance (40) l'une de l'autre qui est plusieurs fois supérieure à une distance d'une respective des deux saillies (26, 28, 30, 76, 78) par rapport à un bord (36, 38) de la paroi latérale (20, 22) qui est proche de cette saillie (26, 28, 30, 76, 78).

7. Élément filtre selon la revendication 6,
**caractérisé en ce qu'**
une première des deux saillies (26, 28, 30, 76, 78) agencées au niveau de la même paroi latérale (20, 22) présente une dimension externe supérieure, en particulier un diamètre supérieur, à celle/celui d'une deuxième des deux saillies (26, 28, 30, 76, 78) agencées au niveau de cette paroi latérale (20, 22).

8. Élément filtre selon la revendication 6,
**caractérisé en ce qu'**
une première des deux saillies (26, 28, 30, 76, 78) agencées au niveau de la même paroi latérale (20, 22) est plus proche d'un bord inférieur (41) de la paroi latérale (20, 22) qu'une deuxième des deux saillies (28, 76, 78) agencées au niveau de cette paroi latérale (20, 22).

9. Élément filtre selon l'une des revendications 5 à 8,
**caractérisé en ce que**
les parois latérales (20, 22), qui présentent les saillies (26, 28, 30, 76, 78) présentent une rigidité inférieure, en particulier une épaisseur inférieure, à celle des parois transversales (32, 34).
